# EUROPEAN PATENT SPECIFICATION

(11) **EP 0 428 756 B1**
(45) Date of publication and mention of the grant of the patent: **25.05.1994**
(21) Application number: 90908657.1
(22) Date of filing: 05.06.1990
(51) Int. Cl.: C04B 40/02

(54) **METHOD OF PRODUCING LIGHTWEIGHT FOAMED CONCRETE**
VERFAHREN ZUR HERSTELLUNG VON LEICHTEM SCHAUMBETON
PROCEDE DE PRODUCTION DE BETON-MOUSSE CELLULAIRE

(30) Priority: 06.06.1989 JP 142265/89; 15.06.1989 JP 150551/89
(43) Date of publication of application: 29.05.1991
(73) Proprietor: ASAHI GLASS COMPANY LTD., Chiyoda-ku Tokyo 100 (JP)
(72) Inventor: TAKAYA, Keizou 4-3-301, Marubashi-cho, Hyogo 662 (JP); TOMIZAWA, Akira 860-32, Yabe-cho Totsuka-ku, Kanagawa 244 (JP); TAHARA, Masao 775-1, Kanegaya Asahi-ku, Kanagawa 241 (JP)
(74) Representative: Wächtershäuser, Günter, Prof. Dr.
(86) International application number: JP9000728
(87) International publication number: WO9015036

(56) References cited:
- GB-A- 1 269 960
- JP-A- 6 015 104
- JP-B- 4 222 639
- JP-B- 4 715 359
- JP-B- 4 716 840
- WORLD PATENTS INDEX LATEST, accession no. 89-230776, week 32, Derwent Publications Ltd, London, GB; && JP-A-1 165 406 (ASAHI GLASS K.K.) 29-06-1989
- WORLD PATENTS INDEX LATEST, accession no. 82-94470e, week 44, Derwent Publications Ltd, London, GB; && SU-A-893 533 (NOVOK URALS CONS.) 30-12-1981
- CHEMICAL ABSTRACTS, vol. 104, no. 18, May 1986, page 362, abstract no. 154653t, Columbus, Ohio, US; && JP-A-60 175 527 (ASAHI CHEMICAL INDUSTRY CO.) 09-09-1985
- WORLD PATENTS INDEX, accession no. 76-29716x, week 16, Derwent Publications Ltd, London, GB; & SU-A-478 804 (R.I. ARAV) 09-01-1973

## Description

The present invention relates to a process for producing autoclaved light weight aerated concrete (ALC), particularly a process for producing ALC, which can prevent the occurrence of internal fine cracks during continuously producing the ALC.

Recently, many buildings, particularly houses using ALC have been built since ALC has preferable light weight, refractory and heat-insurating properties.

Heretofore, in the production of ALC, as defined in JISA 5416, a slurry is prepared by mixing a foaming agent and other miscible components such as water, aluminum powder and the like, with starting materials such as cement, lime, silica sand and the like. Thereafter, the above prepared slurry is introduced into a casting tank where an iron reinforcing material is previously placed, and the slurry is foamed and semicured so as to become suitable for handling. The cast tank is then dismantled to take the product out, and the product is cut into pieces of a predetermined size by a piano wire and steam-cured in an autoclave to obtain a final product.

However, the most disadvantageous point of the conventional process is that the productivity is very low since it is a batch type process using a casting tank.

In order to improve the advantageous point, it is suggested to continuously conduct the shaping process by placing starting materials for ALC on a running flat endless belt (see Japanese Unexamined Patent Publication No. 15104/1985).

This process is useful since it is a continuous shaping process, but it is difficult to cure the starting materials in a short time to a predetermined hardness. It is therefore necessary to use a large amount of expensive alumina cement for shortening the curing time, which leads to a high cost product.

As a measure for solving an above high cost problem, if a slurry of starting materials is heated for shaping, the curing speed can be accelerated even with a cheep cement, which enables the production of an industrially economical ALC. However, this measure has such a disadvantage that internal fine cracks occur by exothermic expansion in the curing step of a shaped body, which badly affects strength, water-proofing properties and the like of a final product.

This tendency is stronger according as the thickness of a final product becomes larger, and it is therefore substantially difficult to produce a final product having a thickness of 60 cm or larger.

We have studied and made various researches to aim at removing the above mentioned disadvantages and preventing the occurrence of internal cracks in the production of ALC by a continuous shaping process, and then have found that the above aim can be achieved by carrying out the curing while controlling the temperature rise of the interior of a shaped body within a predetermined range or controlling the expansion amount of the shaped body within a predetermined range.

The present invention provides, as the first embodiment, a process for producing autoclaved light weight aerated concrete, which comprises casting a bubble-containing slurry to form a shaped body; obtaining a semicured intermediate having a thickness of from 20 to 60 cm while controlling the temperature rise of the interior of the shaped body at a level of not higher than 30°C above the slurry temperature during the casting; and then curing the intermediate to obtain autoclaved light weight aerated concrete.

The present invention further provides, as the second embodiment, a process for producing autoclaved light weight aerated concrete, which comprises casting a bubble-containing slurry to form a shaped body; curing the shaped body to obtain a demoldable semicured intermediate; and then curing the intermediate to obtain autoclaved light weight aerated concrete while controlling an expansion amount in the thickness of the intermediate at a level of not more than 5% on the basis of the thickness of the shaped body and also controlling the bulk density difference between the upper part and the lower part of a final product at a level of not more than 0.04 g/cm³.

The first embodiment of the present invention is suitable for producing a relatively thin intermediate, particularly having a thickness of less than 60 cm, and the second embodiment of the present invention is suitable for producing an intermediate having a thickness of more than 50 cm. In the present invention, the term "intermediate" means an intermediate product cured to such a degree as to form a crater having a diameter of about 25 mmφ on the surface when dropping an iron ball of 40 mmφ from a height of 4.9 cm.

In the first embodiment of the present invention, the internal temperature rise in the production of the intermediate shaped body must not exceed 30°C since cracks tend to occur internally. On the other hand, it is not preferable to control the temperature rise too small since the productivity becomes low. Thus, the internal temperature rise of a shaped body is preferably in the range of from 13 to 30°C, most preferably in the range of from 15 to 30°C.

In the first embodiment of the present invention, various methods are considerable as a measure for controlling the temperature rise of the interior of a shaped body at a level of not higher than 30°C, and the generation of cracks can be prevented fully and stably by the following measures.

A slurry of starting materials is prepared by using water in an amount of not more than 0.75 part by weight, preferably from 0.5 to 0.75 part by weight per part by weight of solid content. It is not preferable when the water content exceeds 0.75 part by weight. That is, the slurry becomes too soft for casting, and foam collects on the upper surface, thereby producing a difference in bulk density between the upper and lower part of the shaped body. Furthermore, the initial curing is delayed.

On the other hand, it is not preferable to make the water content less than 0.5 part by weight in view of the following points.

Since the fluidity of the slurry becomes insufficient, voids tend to occur (particularly in the vicinity of iron reinforcing material) during casting.

It is preferable that the slurry having the above mentioned water content is cast after being adjusted at a temperature in the range of from 45°C to 80°C. If the slurry temperature is less than 45°C, the curing time becomes so long that the productivity is lowered. On the other hand, if the slurry temperature becomes too high exceeding 80°C, cracks tend to occur due to a rapid temperature rise by hydration reaction.

A suitable composition of the solid content of the slurry generally comprises from 20 to 40% by weight of cement, from 5 to 15% by weight of lime, from 40 to 60% by weight of silica sand and from 3 to 10% by weight of gypsum.

Examples of the cement used herein include ordinary Portland cement, first-curing Portland cement, slag cement, alumina and the like. However, it is particularly effective for first-curing if first-curing Portland cement is used in an amount of from 75 to 100% by weight of the total cement amount and ordinary Portland cement is used in the remaining amount. Also, it is effective for preventing heat-generation to have lime 50 to 100% slaked before casting.

The temperature of the curing atmosphere is so controlled as not to exceed 40°C higher than the temperature of a shaped body in the curing after shaping the slurry. It is preferable to control the temperature of the curing atmosphere in such manner that the difference between the dry-bulb and the wet-bulb of a phychrometer becomes 20°C or larger, particularly from 20 to 30°C.

This can be achieved by controlling the temperature of the surface of a casting mold with which the slurry of starting materials directly comes into contact, i.e. the temperature of a cake bed, so as not to exceed 15°C higher than the temperature of a shaped body to be cured.

In the present invention, it is preferable to satisfy all of the above mentioned various operating conditions.

The composition of starting materials is basically as mentioned above, but a coloring agent, a water-proofing agent and other additives may optionally be incorporated herein as far as they do not prevent the object of the present invention from being attained.

Amounts and sizes of bubbles contained in the slurry of starting materials include those of ordinarily used ones, and are not limited but selected from a wide range. The starting slurry thus prepared is cast into a shaped body having a thickness of from 40 to 45 cm. The casting thickness of the starting slurry is determined by considering that the shaped body expands about 3% while it is converted into a semicured intermediate.

According to the present process, when a continuous process for shaping and curing on a running belt is employed, it is possible to obtain an intermediate having a demoldable hardness at a line length of about 80 to 120 m at a running speed of 0.8 to 1.2 m/min., thus providing a production line suitable for mass production without generating any internal cracks. The intermediate thus demolded is autoclave-cured in accordance with an ordinary method to obtain a final product.

The autoclaved light weight aerated concrete thus obtained can be used with a thickness as it is, i. e. from 20 to 60 cm, but may be cut into a sample having an appropriate thickness. The cutting may be carried out at the stage of the intermediate, and may be carried out after completely curing by autoclave curing or other means.

In the second embodiment of the present invention, an expansion amount in the thickness of an intermediate is controlled at a level of not more than 5% on the basis of the thickness of a shaped body shaped by casting the starting slurry. If the expansion amount exceeds 5%, cracks occur, and voids are generated at the interface with the iron reinforcing material, which unfavorably leads to the lowering of strength. It is preferable to reduce the expansion amount as small as possible for preventing the occurrence of cracks, but the productivity is lowered if the expansion amount is controlled to excessively lower level. Thus, in view of the productivity, a preferable expansion amount is in the range of from 2 to 4%.

On the other hand, in a final product, the bulk density of the upper part of a shaped body tends to be smaller than that of the lower part of the shaped body. If this difference in the bulk density exceeds 0.04 g/cm³, strength is unfavorably lowered.

The following slurry may be used, as an example, for obtaining the above mentioned favorable expansion amount and bulk density.

The composition of the solid content of the satisfactory slurry generally comprises from 20 to 40% by weight of cement, from 5 to 15% by weight of lime, from 40 to 60% by weight of silica sand and from 3 to 10% by weight of gypsum.

Examples of the cement used herein include ordinary Portland cement, first-curing Portland cement, slag cement, alumina cement and the like. Among them, it is particularly preferable in view of first-curing to use first curing Portland cement in an amount of from 75 to 100% by weight of the total amount of cement and ordinary Portland cement in the remaining amount.

It is preferable to use lime 50-100% in particular 80-95% of which has been slaked. As a slaked lime, it may be possible to use a slaked lime in an amount of from 50 to 100% as a starting material. However, it is preferable to slake lime just before mixing with other starting materials in view of the reaction during autoclave-curing. If the slaked degree of the lime is not more than 50%, the expansion amount of a shaped body becomes excessive by the hydration reaction heat of the lime after casting a slurry, which leads to the generation of unfavorable expansion cracks and voids at the interface with iron reinforcing material.

A slurry for casting preferably has a flow value in the range of from 150 to 230 mm measured in accordance with JIS-R 5201 (the 15th dropping is not conducted), more preferably in the range of from 170 to 210 mm in view of casting properties. If the flow value is not more than 150 mm, coarse bubbles are unfavorably involved during casting and unpreferable voids are generated in the vicinity of iron reinforcing material. On the other hand, if the flow value exceeds 230 mm, the slurry and bubbles tend to be separated, which brings about unfavorable bulk density difference between the upper part and the lower part of the shaped body.

The temperature of the slurry for casting is preferably not less than 50°C in order to accelerate the initial curing, to prevent the separation between the bubbles and the slurry and to improve the productivity.

Since an excessive heat or cooling applied to an shaped body leads to the generation of cracks, the atmosphere temperature during initial curing should be controlled so as not to exceed 40°C higher than the casting temperature of the shaped body, and the humidity should preferably be controlled in such manner that the difference between the dry-bulb and the wet-bulb of a psychrometer becomes 20°C or larger. Also, the temperature of the bed surface of the shaped body is preferably controlled so as not to exceed 15°C higher than the temperature of the shaped body.

The composition of the starting materials is basically as mentioned above, but a coloring agent, a water-proofing agent or other additives may optionally be incorporated wherein as far as they do not check the object of the present invention.

Amounts and sizes of bubbles contained in the starting slurry may be selected from the ordinarily used range, but should not be limited thereto and may be selected from a wider range. The starting slurry thus prepared is cast into a shaped body having a predetermined casting thickness. The thickness of the shaped body is determined by considering the expansion amount of an intermediate having a thickness determined from the thickness of the aimed autoclaved light weight aerated concrete.

Generally, a part unfavorable as a final product is present in the upper layer and the lower layer of an intermediate, and the thickness of the intermediate is therefore determined by considering the thickness of the unfavorable part. The thickness of the unfavorable part is generally about several cm at most.

According to the process of the present invention, when a continuous process for shaping and curing on a running belt is employed, it is possible to obtain an intermediate having a moldable hardness at a line length of about from 80 to 120 m at a running speed of 0.5 to 1.2 m/min., thus providing a production line suitable for mass production without generating any internal cracks. The intermediate thus demolded is autoclave-cured in accordance with an ordinary method to obtain a final product.

The autoclaved light weight aerated concrete thus obtained can be used with a thickness as it is, i.e. 50 to 120 cm, but may be cut into a sample having an appropriate thickness. The cutting may be carried out at the state of the intermediate, and may be carried out after completely curing by autoclave-curing or other means.

The present invention was explained with regard to a process for producing ALC internally having reinforcing material placed, but as a matter of fact, the present invention can be applied also to a process for producing ALC without having iron-reinforcing material.

According to the present invention, there is provided an autoclaved light weight aerated concrete which does not generate substantial cracks and voids at the interface with iron-reinforcing material. Particularly, according to the second embodiment of the present invention, there is provided a thick autoclaved light weight aerated concrete having a thickness of from 50 to 120 cm which was substantially difficult to be produced by the conventional techniques.

### BEST MODE FOR CARRYING OUT THE INVENTION

### Example 1

A slurry was prepared by adding 0.65 part by weight of water to 1 part by weight of a solid content comprising 32% by weight of first-curing cement, 11% by weight of quick lime 78% slaked with water, 53% by weight of silica sand and 4% by weight of gypsum. The temperature of the slurry was maintained at 65°C by blowing water vapor into the slurry, and bubbles previously prepared by blowing air into a protein type foaming agent were blown into the slurry.

On the other hand, an endless belt made of stainless steel having a width of 90 cm and turning at a length of 100 m was prepared by providing metallic rolls having a diameter of 100 cm on both ends at the turns in such manner as to run in accordance with an ordinary method.

A box with an iron-made canopy having small holes of 3 mm in diameter in an amount of 90 pieces/m² along the hole width of the belt was provided to the face of the upper belt between the turns of the belt, and the belt was maintained uniformly flat by means of a wind pressure of 500 mmaq per hole.

A weir belt having a length of 60 m and a height of 60 cm was run on both sides of the endless belt simultaneously with the endless belt in such manner as to form a casting mold.

The face of the endless belt was maintained at 50°C, and the above prepared slurry was cast to a thickness of 55 cm. The atmosphere temperature was maintained at 80°C along the whole length of the belt, and the belt was run at a speed of 1 m/min. while maintaining the temperature of a wet-bulb at 55°C, thereby carrying out curing.

As this result, an intermediate having a demoldable hardness (the hardness at which a crater of 25 mmφ or less is formed when dropping an iron ball of 40 mmφ from a height of 4.9 cm) was obtained 97 m ahead on the belt.

During this operation, a temperature rise of the interior of a shaped body was measured by a thermometer provided in the interior of the shaped body, and the temperature rise was 20°C at the highest.

The intermediate was then demolded and was cured in an autoclave by normal method to obtain an autoclaved light weight aerated concrete. The concrete thus obtained was cut to observe the interior state, but the generation of unfavorable cracks and voids was not recognized.

### Example 2

An autoclaved light weight aerated concrete was produced in the same manner as in Example 1, except that a slurry was prepared by adding water in the same ratio as in Example 1 to a solid content comprising 35% by weight of first-curing cement, 12% by weight of quick lime having 78% slaked, 50% of silica sand and 3% by weight of gypsum, and that the temperature of the slurry was maintained at 65°C.

During this operation, the temperature rise of the interior of a shaped body was 25°C at the highest until an intermediate was obtained.

An autoclaved light weight aerated concrete was cut to observe, but cracks, voids and the like were not recognized.

### Comparative Example 1

An autoclaved light weight aerated concrete was produced in the same manner as in Example 1, except that 35% slaked lime was used as a lime. During the production step, the temperature rise of the interior of a shaped body was 35°C. The autoclaved light weight aerated concrete was cut to observe the interior state, but fine cracks were recognized at the horizontal direction and voids were also recognized at the interface with iron-reinforcing material.

### Example 3

A slurry was prepared by kneading a predetermined amount of water with 32% by weight of first-curing cement, 11% by weight of quick lime, 53% by weight of silica sand and 4% by weight of gypsum and further uniformly kneading therein bubbles previously prepared by blowing air into a protein type foaming agent.

The slaked degree of the lime used herein was 95%. The flow value of the slurry was 210 mm. The temperature of the slurry was fixed to 58°C. The water/solid content ratio at that time was 0.71.

The bubble-containing slurry was cast to a height of 125 cm in a continuously shaping device having a width of 110 cm and a length of 100 m where iron-reinforcing material was placed in such manner that the width of a test piece may become the thickness of a shaped body.

The shaped body thus obtained was introduced into a curing chamber having a dry-bulb temperature of 80°C and a wet-bulb temperature of 55°C at a line speed of 0.6 m/min., and was converted into a semicured body having a thickness of 130 cm at the outlet of the curing chamber positioned 80 m ahead. The temperature of the central part of the shaped body at that time was 85°C.

The upper layer and the lower layer of the cured body thus obtained were cut to obtain an intermediate having a thickness of 120 cm. Thereafter, piano wires were vertically placed at intervals of 10 cm on the same line, and the intermediate was cut into 10 cm width by passing though the wires. The cut samples were then cut to a length of 4 m to obtain a test piece of 10 cm x 120 cm x 4 m, and the test pieces were cured in the autoclave.

After curing, respective parts of the test piece were cut to measure bulk density and compression strength and to observe the state in the vicinity of the iron-reinforcing material. As this result, the bulk density difference between the upper part and the lower part of the test piece was 0.04 g/cm³. The compression strength of the part having the higher bulk density was 65 kg/cm² and that of the part having the lower bulk density was 42 kg/cm². The void on the iron-reinforcing material was 7 mm at the largest. Cracks were not recognized.

### Comparative Example 2

An autoclaved light weight aerated concrete was produced in the same manner as in Example 3, except that a quick lime having a slaked degree of 40% was used. The intermediate thus obtained had a thickness of 134 cm, and the expansion amount was 7% on the basis of the thickness of the shaped body of the slurry. The temperature rise of the central part of the shaped body was 97°C.

With regard to the bubble-containing autoclaved light weight aerated concrete, the same observation as in Example 3 was carried out, and it was observed that cracks occurred on the side face and that a large void of about 30 mm was present at the interface with the iron-reinforcing material. The bulk density difference between the upper part and the lower part of the autoclaved light weight aerated concrete was 0.03 g/cm³.

On the other hand, a similar autoclaved light weight aerated concrete was produced using the same slurry as in Example 3, except that the flow value was adjusted to 235 mm. The expansion amount of the intermediate thus obtained was 3.3%, but the bulk density difference between the upper part and the lower part of the autoclaved light weight aerated concrete thus obtained was 0.079 g/cm³. This autoclaved light weight aerated concrete had cracks generated on the side face.

## Claims

1. A process for producing autoclaved light weight aerated concrete, which comprises casting a bubble-containing slurry to form a shaped body; obtaining a semicured intermediate having a thickness of from 20 to 60 cm while controlling the temperature rise of the interior of the shaped body at a level of not higher than 30°C above the slurry temperature during the casting; and then curing the intermediate to obtain autoclaved light weight aerated concrete.

2. The process according to Claim 1, wherein the bubble-containing slurry contains water in an amount of not more than 0.75 part by weight per part by weight of solid content and the casting is carried out at a temperature in the range of from 45°C to 80°C.

3. The process according to Claim 1, wherein the bubble-containing slurry contains a lime that is at least 50% slaked.

4. A process for producing autoclaved light weight aerated concrete, which comprises casting a bubble-containing slurry to form a shaped body; curing the shaped body to obtain a demoldable semicured intermediate; and then curing the intermediate to obtain autoclaved light weight aerated concrete while controlling an expansion amount in the thickness of the intermediate at a level of not more than 5% on the basis of the thickness of the shaped body and also controlling a bulk density difference between the upper part and the lower part of a final product at a level of not more than 0.04 g/cm³.

5. The process according to Claim 4, wherein the intermediate has a thickness of from 50 cm to 130 cm.

## Patentansprüche

1. Verfahren zur Herstellung von autoklavengehärtetem, leichtem Schaumbeton, umfassend das Gießen einer blasenhaltigen Aufschlämmung zur Bildung eines Formkörpers; Gewinnung eines halbgehärteten Zwischenprodukts mit einer Dicke von 20 bis 60 cm, wobei während des Gießens der Temperaturanstieg des Inneren des Formkörpers bei einem Niveau von nicht über 30 °C oberhalb der Aufschlämmungstemperatur eingestellt wird; und anschließende Härtung des Zwischenprodukts unter Gewinnung von autoklavengehärtetem, leichtem Schaumbeton.

2. Verfahren gemäß Anspruch 1, wobei die blasenhaltige Aufschlämmung Wasser in einer Menge von nicht mehr als 0,75 Gew.- Teile pro Gew.-Teil des Feststoffgehalts enthält und das Gießen bei einer Temperatur im Bereich von 45 °C bis 80 °C durchgeführt wird.

3. Verfahren gemäß Anspruch 1, wobei die blasenhaltige Aufschlämmung einen Kalk enthält, der mindestens zu 50 % gelöscht ist.

4. Verfahren zur Herstellung von autoklavengehärtetem, leichtem Schaumbeton, umfassend das Gießen einer blasenhaltigen Aufschlämmung zur Bildung eines Formkörpers, Härtung des Formkörpers zur Gewinnung eines entformbaren, halbgehärteten Zwischenprodukts und anschließende Härtung des Zwischenprodukts zur Schaffung von autoklavengehärtetem, leichtem Schaumbeton, wobei eine Dickenexpansion des Zwischenprodukts auf ein Niveau von nicht mehr als 5 %, bezogen auf die Dicke des Formkörpers, eingestellt wird, und außerdem ein Schüttdichten-Unterschied zwischen dem oberen Teil und dem unteren Teil eines fertigen Produkts auf ein Niveau von nicht mehr als 0,04 g/cm³ eingestellt wird.

5. Verfahren gemäß Anspruch 4, wobei das Zwischenprodukt eine Dicke von 50 cm bis 130 cm aufweist.

## Revendications

1. Procédé de production de béton cellulaire allégé autoclavé comprenant le moulage d'une suspension contenant des bulles pour former un corps profilé, l'obtention d'un produit intermédiaire semi-durci ayant une épaisseur de 20 à 60 cm tout en réglant l'augmentation de la température à l'intérieur du corps profilé à une valeur non supérieure à 30°C au-delà de la température de la suspension pendant le moulage, puis le durcissement du produit intermédiaire pour obtenir du béton cellulaire allégé autoclavé.

2. Procédé selon la revendication 1, dans lequel la suspension contenant des bulles contient de l'eau en quantité non supérieure à 0,75 partie en poids par partie en poids de matière solide et dans lequel le moulage est effectué à une température comprise dans l'intervalle de 45 à 80°C.

3. Procédé selon la revendication 1, dans lequel la suspension contenant des bulles contient une chaux dont au moins 50% sont constitués par de la chaux éteinte.

4. Procédé de production de béton cellulaire allégé autoclavé, comprenant le moulage d'une suspension contenant des bulles pour former un corps profilé, le durcissement du corps profilé pour obtenir un produit intermédiaire semi-durci démoulable, puis le durcissement du produit intermédiaire pour obtenir un béton cellulaire allégé autoclavé tout en réglant le degré de dilatation dans l'épaisseur du produit intermédiaire à une valeur non supérieure à 5% rapportée à l'épaisseur du corps profilé et en réglant également la différence de poids volumique apparent entre la partie supérieure et la partie inférieure du produit final à une valeur non supérieure à 0,04 g/cm³.

5. Procédé selon la revendication 4 dans lequel le produit intermédiaire a une épaisseur de 50 cm à 130 cm.
